# EUROPÄISCHE PATENTANMELDUNG

(11) **EP 1 146 018 A1**
(43) Veröffentlichungstag der Anmeldung: **17.10.2001**
(21) Anmeldenummer: 01106109.0
(22) Anmeldetag: 13.03.2001
(51) Int. Cl.: C03C 3/083, C03C 10/00

(54) **Gefloatetes Flachglas**

(30) Priorität: 08.04.2000 DE 10017701
(71) Anmelder: Schott Glas, 55122 Mainz (DE); CARL-ZEISS-STIFTUNG trading as SCHOTT GLAS, 55122 Mainz (DE)
(72) Erfinder: Siebers, Friedrich, Dr., 55283 Nierstein (DE); Nass, Peter, Dr., 55120 Mainz (DE); Lautenschläger, Gerhard, Dr., 07743 Jena (DE); Becker, Otmar, Dr., 62225 Langen (DE)
(74) Vertreter: Fuchs Mehler Weiss & Fritzsche

(57) **Zusammenfassung**

Die Erfindung bezieht sich auf ein gefloatetes Flachglas, das vorspannbar oder in eine Glaskeramik mit Hochquarz-Mischkristallen oder Keatit-Mischkristallen umwandelbar ist. Um störende Oberflächeneffekte beim Floaten zu vermeiden und überlegene Eigenschaften des Glases bzw. der Glaskeramik insbesondere hinsichtlich eines kleinen Wärmeausdehungskoeffizienten und hoher Lichttransmission zu erzielten, weist das Glas einen Gehalt von weniger als 300 ppb Pt, weniger als 30 ppb Rh, weniger als 1,5 Gew.-% ZnO und weniger als 1 Gew.-% SnO₂ auf, und ist bei der Schmelze ohne Verwendung der üblichen Läuterungsmittel Arsen- und/oder Antimonoxid geläutert.

## Beschreibung

Die Erfindung betrifft ein gefloatetes Flachglas, das vorspannbar oder in eine Glaskeramik mit Hochquarz-Mischkristallen oder Keatit-Mischkristallen umwandelbar ist.

Bei zahlreichen Anwendungen des Werkstoffes Glas wird Flachglas benötigt, beispielsweise in Form von Glasscheiben als Sichtfenster und für Displayzwecke. Die Herstellung von solchem Flachglas aus der Glasschmelze erfolgt nach den bekannten Verfahren wie Walzen, Ziehen, Gießen und Floaten.

Eine besondere Bedeutung kommt dabei wegen der hohen Oberflächenqualität dem Floaten zu, das in der Glastechnik weitgehend Verbreitung gefunden hat. Bei der Herstellung von Glasscheiben nach dem Floatglas-Verfahren wird ein Glasband aus dem Glasschmelzofen gezogen und anschließend wird zur Oberflächenglättung das noch verformbare Glas über ein Metallbad (z.B. aus geschmolzenem Zinn) gezogen. Dabei "schwimmt" das Glas auf dem flüssigen Metall. Nach Verlassen des Metallbades wird das Glasband abgekühlt und anschließend in einzelne Scheibenabschnitte zerteilt. Dabei entsteht ein planes Glas mit parallelen und feuerpolierten Oberflächen mit hoher Oberflächenqualität.

Mit dem Floatglas-Verfahren lassen sich Flachgläser aus unterschiedlichen Glasmaterialien herstellen. So ist das Floaten von den üblichen Kalk-Natron-Gläsern aber auch von Spezialgläsern, wie z.B. Borosilikatgläsern oder Aluminosilikatgläsern, bekannt.

Unter Kalk-Natron-Gläser sind solche zu verstehen, die im wesentlichen aus den Ausgangsstoffen Siliciumdioxid (SiO₂), Kalk (CaCO₃) und Soda (Na₂CO₃) hergestellt werden. Gefloatetes Kalk-Natron-Glas ist dabei auch thermisch vorspannbar und erfüllt damit die Forderungen, die an ein Sicherheitsglas gestellt werden. Um diese thermische Vorspannung zu erreichen, ist es notorisch bekannt, daß zugeschnittene Scheiben aus Floatglas auf ca. 600° bis 700° erwärmt und anschließend durch einen kalten Luftstrom sehr rasch abgekühlt werden. Durch diesen Aufwärm- und raschen Abkühlvorgang entstehen in der Oberfläche des Glases starke Druckspannungen und im Inneren Zugspannungen. Dies resultiert in einer beträchtlichen Steigerung der Biegezugfestigkeit des Glases, einer Ausbildung von Unempfindlichkeit gegen rasche Temperaturschwankungen und in einem hohen Federungsvermögen. Bei stärkster Beanspruchung zerbricht dann solches vorgespanntes Glas in einer Vielzahl wenig scharfkantiger Krümel. Gefloatete Kalk-Natron-Gläser finden daher breite Verwendung, z.B. in der Gebäudeverglasung oder als gebogene Gläser für die Verglasung von Automobilen.

Kalk-Natron-Gläser lassen sich auch chemisch vorspannen.

Beim chemischen Vorspannen wird die Druckspannung in der Oberfläche des Glases durch Ionenaustausch erreicht. Dabei ersetzen Ionen mit größerem Radius, die von außen in das Glas eindringen, kleinere Ionen. Infolge des größeren Platzbedarfs der eindringenden Ionen wird eine hohe Druckspannung in der Oberfläche erreicht, mit der sich eine Festigkeitssteigerung auf das 5 - 8-fache erreichen läßt.

Meist wird der Ionenaustausch mit Alkaliatomen durchgeführt, entweder in Salzschmelzen oder mit Hilfe aufgebrachter Pasten. Üblich ist die Behandlung mit Kaliumatomen, die gegen Natriumatome im Glas ausgetauscht werden. Wichtig ist, daß die Behandlung unterhalb der Transformationstemperatur des Glases erfolgt, weil sich sonst die Druckspannung thermisch bedingt abbaut. Derart chemisch gehärtete Gläser werden für besondere Anforderungen gebraucht, so in der Raumfährt, Flugzeugindustrie, für Zentrifugengläser und im Beleuchtungssektor.

Als Borosilikatglas bezeichnet man ein Silikatglas, das zwischen 7% und 15% Boroxid enthält. Aufgrund seiner Zusammensetzung verfügt es über eine hohe Temperaturwechselbeständigkeit sowie über eine sehr hohe hydrolytische und Säurebeständigkeit. Es ist ebenfalls wie das Kalt-Natron-Glas floatbar, thermisch vorspannbar, und wird beispielsweise bei der Herstellung mit NaCl geläutert.
Gefloatete Borosilikatgläser finden daher dort Anwendung, wo es auf höhere chemische Beständigkeit und höhere Temperaturbelastbarkeit ankommt.

Als Aluminosilikatglas bezeichnet man ein Silikatglas, das als wesentlichen Bestandteil Alumniumtrioxid neben anderen Oxiden enthält. Dazu zählen insbesondere Gläser aus dem System Li0₂ - Al₂0₃ - Si0₂. Auch ein derartiges Glas ist floatbar, thermisch vorspannbar, und wird beispielsweise mit SnO₂ geläutert. Gefloatete Aluminosilikatgläser besitzen ebenfalls eine verbesserte chemische Beständigkeit und höhere Temperaturbelastbarkeit und haben darüber hinaus zum Teil den Vorteil einer Freiheit von Alkalikomponenten, was sie für Anwendungen als Substratglas in der Displaytechnik geeignet macht.

Es ist generell bekannt, daß sich Aluminosilikatgläser aus dem System Li0₂-Al₂O₃-SiO₂ in Glaskeramiken mit Hochquarz-Mischkristallen oder Keatit-Mischkristallen als Hauptkristallphasen umwandelt lassen. Glaskeramik besteht daher aus einer kristallinen und einer Rest-Glasphase. Das Ausgangs-Glas erhält man zunächst auf dem Weg über normale Glasfertigungsverfahren. Nach Einschmelzen und Läutern erfährt das Glas üblicherweise eine Heißformgebung durch Walzen, Gießen oder Pressen. Danach wird das Glas einer Wärmebehandlung unterzogen, wodurch das Glas gesteuert zum Teil in eine feinkörnige, kristalline Phase umgewandelt wird.
Eine Schlüsseleigenschaft dieser Glaskeramiken ist, daß mit ihnen Werkstoffe herzustellen sind, die in einem Temperaturbreich von Raumtemperatur bis etwa 700°C über einen äußerst niedrigen Wärmausdehnungskoeffizienten α_{20/700} <1,5.10⁻⁶/K verfügen. Diese Glaskeramiken finden daher in transparenter Form Anwendung zum Beispiel als Brandschutzglas, Kaminsichtscheiben oder Kochgeschirr, sowie als Substratmaterial für wafer stages oder Spiegelträger für Teleskope. Durch Zugabe von Farboxiden werden die transparenten Glaskeramiken dunkel eingefärbt. Diese dunkle Einfärbung ist z.B. bei der Anwendung als Kochfläche gewünscht, um die Durchsicht auf die technischen Aufbauten unter der Kochfläche zu vermeiden.

Bei der großtechnischen Schmelze von Glaskeramiken wird typischerweise Arsen- und/oder Antimonoxid als Läutermittel eingesetzt. Diese Läutermittel sind verträglich mit den geforderten Glaskeramikeigenschaften und führen zu guten Blasenqualitäten bzw. geringen Blasenzahlen bei der Schmelze. Auch wenn diese Stoffe im Glas fest im Gerüst eingebunden sind, so sind sie doch unter Sicherheits- und Umweltschutzaspekten nachteilig, weil bei der Rohstoffgewinnung und Aufbereitung und wegen der Verdampfung bei der Schmelze, sowie bei Nachverarbeitungsprozessen, Recycling und Deponierung besondere Vorsichtsmaßnahmen ergriffen werden müssen.

Es ist bekannt, daß die Herstellung von Glaskeramikprodukten in verschiedenen Stufen abläuft. Nach der Schmelze und Heißformgebung wird das Material üblicherweise unter die Transformationstemperatur des Glases abgekühlt. Anschließend wird das Ausgangsglas durch gesteuerte Kristallisation in den glaskeramischen Artikel überführt. Diese Keramisierung erfolgt in einem zweistufigen Temperaturprozeß, bei dem zunächst durch Keimbildung bei der Temperatur zwischen 600°C und 800°C Keime, üblicherweise aus ZrO₂-TiO₂-Mischkristallen, erzeugt werden. Bei der anschließenden Temperaturerhöhung wachsen bei der Kristallisationstemperatur von ca. 800 bis 900°C die Hochquarz-Mischkristalle auf diese Keime auf. Die Umwandlung in Keatit-Mischkristalle erfolgt im Temperaturbereich von ca. 900°C bis 1200°C. In der Regel sind Glaskeramiken mit Keatit-Mischkristallen als Hauptphasen transluzent oder opak mit einem weißen Farbton und einem geringfügig höheren thermischen Ausdehnungskoeffizienten als Glaskeramiken mit Hochquarz-Mischkristallen als Hauptphase.

Um die Herstellung solcher Glaskeramiken bei einem gefloateten Ausgangsglas zu vereinfachen, hat man, beispielsweise gemäß der US 3,804,608, versucht, die Keramisierung bereits im Floatbad durchzuführen, um so die Glaskeramiken direkt zu erhalten. Während des Floatprozesses wird jedoch durch das heiße Floatbad und die kalte obere Glasoberfläche ein Temperaturgradient über die Dicke des Glasbandes erzeugt, woraus asphärisch wachsende Kristalle senkrecht zur Oberfläche resultieren. Durch die Kristallisation während des Floatens werden bestimmte störende mechanische, magnetische Eigenschaftsanisotropien generiert.

Ferner beschreibt die GB 1 383 201 das Floaten von Li₂O-Al₂O₃-SiO₂-Glaskeramiken mit TiO₂, ZrO₂ oder P₂O₅ als Keimbildnern, die durch die Temperaturführung während des Floatens auf dem flüssigen nicht benetzenden Metall (Zinn) kristallisiert werden. Diese Druckschrift beschreibt die erforderliche Temperaturführung im Floatteil, nämlich zunächst schnelle Abkühlung und anschließende Temperaturerhöhung, um zuerst Keimbildung und dann Kristallisation durchzuführen. In der Floatanlage werden zum Erreichen der hohen Heiz- und Abkühlraten senkrechte Abtrennungen von der Decke des Floatbades bis knapp oberhalb des Glases geführt, um verschiedene Temperaturzonen kammerartig zu trennen. Die unterschiedlichen Zonen sind im Zinnbad und oberhalb des Glasbandes beheizt. Da bei dieser Schrift das Herstellen der gefloateten Glaskeramik und nicht das auf das Floatbad aufgegossene unkeramisierte Glas als solches im Vordergrund steht, enthält die vorgenannte Schrift keinen Hinweis auf etwaige störende Oberflächendefekte im Glas beim Floaten. Da sich die Lehre nach dieser Schrift darauf beschränkt, das Glas noch innerhalb des Floatteils zu kristallisieren, ist die Problematik der Entstehung störender Kristalle im Glas nicht gegeben. Bei der Herstellung von Floatglas aus dem Li₂0-Al₂0₃-Si0₂-System entstehen jedoch störende Oberflächendefekte im Glas, die die Oberflächenqualität beeinträchtigen, wie noch dargelegt werden wird. Ferner besteht wegen des erzielbaren wirtschaftlichen Vorteils das Bedürfnis, mit einer Glas-Zusammensetzung im Li₂O-Al₂O₃-SiO₂-System auch thermisch vorspannbare Gläser herzustellen und auf diesen basierende Anwendungen zu realisieren. Dies ist jedoch mit dem Glaskeramik-Produkt nach der vorgenannten GB-Schrift nicht möglich.

Der Erfindung liegt die Aufgabe zugrunde, vorspannbare oder in eine Glaskeramik mit Hochquarz-Mischkristallen oder Keatit-Mischkristallen als Hauptkristallphase umwandelbare gefloatete Flachgläser bereitzustellen, die
- keine für die Anwendung der Gläser störende Oberflächendefekte, die an sich beim Floaten durch Wechselwirkung zwischen Glasschmelze und flüssigem Metall entstehen, aufweisen,
- sich mit einem hohen Lichttransmissionsgrad ohne störende Einfärbung herstellen lassen,
- über eine hohe Temperaturbelastbarkeit nach thermischer Vorspannung verfügen,
- ohne die üblichen chemischen Läutermittel, wie Arsen und/oder Antimonoxide die erforderlichen Blasenqualität besitzen, und die
- bei der Umwandlung in die kristalline Phase zu einer Glaskeramik mit der hohen Oberflächenqualität des Floatens und einem sehr niedrigen Wärmeausdehnungskoeffizienten führen,
- als Glaskeramiken in verschiedenen Ausführungen transparent mit hoher Lichttransmission transluzent, opak und durch Zusatz von färbenden Komponenten auch eingefärbt herstellbar sind.

Diese Aufgabe wird erfindungsgemäß durch ein gefloatetes Flachglas gemäß Anspruch 1 gelöst.

Bei dem erfindungsgemäßen gefloateten vorspannbaren oder in eine Glaskeramik mit Hochquarz-Mischkristallen oder Keatit-Mischkristallen als Hauptkristallphase umwandelbaren Flachglas, wird die Entstehung störender Oberflächendefekte beim Floaten durch die Begrenzung der Gehalte von Pt auf <300 ppb, Rh auf <30 ppb und ZnO auf <1,5 Gew.-%, sowie SnO₂ auf <1 Gew. % vermieden.

Das Glas wird bei der Schmelze ohne Verwendung der üblichen Läutermittel Arsen- oder Antimonoxid geläutert, und die Formgebung des Flachglases wird durch Aufgießen auf ein flüssiges Metall in einer reduzierenden Atmosphäre, d.h. nach dem üblichen Floatverfahren, vorgenommen.

Die Gläser zeichnen sich somit durch eine Zusammensetzung aus, welche es erlaubt, die Entstehung störender Oberflächendefekte beim Floaten zu vermeiden. Floatanlagen bestehen üblicherweise aus der Schmelzwanne, in der das Glas geschmolzen und geläutert wird, einem Interface, welches den Übergang von der oxidischen Atmosphäre in der Schmelzwanne in die reduzierende Atmosphäre des nachfolgenden Anlageteils, des Floatteils, gewährleistet, in dem die Formgebung des Glases durch Aufgießen auf ein flüssiges Metall, meist Sn, in einer reduzierenden Atmosphäre von Formiergas, vorgenommen wird. Die Formgebung des Glases erfolgt durch Glattfließen auf dem Sn-Bad und durch sogenannte Top-Roller, die auf die Glasoberfläche eine Kraft ausüben. Während des Transportes auf dem Metallbad erkaltet das Glas und wird am Ende des Floatteiles abgehoben und in einen Kühlofen überführt. Während der Bildung der Glasoberfläche und des Transportes im Floatbad können Wechselwirkungen zwischen Glas und Floatatmosphäre oder dem Sn-Bad zu störenden Oberflächendefekten führen, die im folgenden erläutert werden.

Wenn das Glas mehr als 300 ppb Pt oder mehr als 30 ppb Rh in gelöster Form enthält, können sich durch die reduzierenden Bedingungen in der Glasoberfläche metallische Ausscheidungen von Pt- oder Rh-Partikeln bilden, die als wirksame Keime für große, bis 100 *µ*m große, Hochquarz-Mischkristalle dienen und so eine störende Oberflächenkristallisation bewirken. Verwendung finden diese Materialien insbesondere als Elektroden, Auskleidung, Rührer, Transportrohre, Schieber, usw.. Bei Anlagen zur Herstellung des erfindungsgemäßen Flachglases werden daher zur Vermeidung der Entstehung von Oberflächenkristallen Einbauten von Werkstoffen aus Pt bzw. Rh weitgehend vermieden und durch keramische Materialien ersetzt bzw. wird deren Belastung in der Schmelzwanne bzw. Interface so gestaltet, daß die genannten Gehalte nicht überschritten werden.

Der ZnO-Gehalt ist auf 1,5 Gew.-% begrenzt. Es hat sich gezeigt, daß unter den reduzierenden Bedingungen des Floatens das Zink in der Oberfläche des Glases verarmt. Es wird dabei angenommen, daß das Zink an der Glasoberfläche teilweise reduziert wird, wodurch es aufgrund des höheren Dampfdruckes von Zn gegenüber dem Zn²⁺ in die Floatatmosphäre verdampft. Neben der für den Betrieb der Floatanlage unerwünschten Verdampfung und Abscheidung des Zn an kälteren Stellen, ist die ungleichmäßige Verteilung des Zn im Glas an der Entstehung von kritischen oberflächennahen Kristallbändern beteiligt. Diese Kristallbänder aus großen Hochquarz-Mischkristallen entstehen in Oberflächennähe dort, wo der Zn-Gehalt im Glas wieder nahezu auf den Ausgangswert angestiegen ist. Im Zusammenspiel mit dem reduzierenden Einfluß der Floatatmosphäre auf polyvalente Glaskomponenten, wie z.B. zu einer teilweisen Reduktion des Ti⁴⁺ zu Ti³⁺ entsteht das Kristallband. Es ist daher zweckmäßig, den Ausgangswert des ZnO im Glas von Anfang an klein zu halten.

Der Gehalt des Glases an SnO₂ ist auf weniger als 1 Gew.-% begrenzt. Durch Einwirkung der reduziernden Bedingungen im Floatteil wird das SnO₂ nämlich in der Glasoberfläche z.T. reduziert. Es bilden sich überraschenderweise Kügelchen aus metallischen Sn im Glas in der unmittelbaren Glasoberfläche mit Größen von ca. 100 nm, die sich beim Abkühlen oder Reinigen zwar leicht entfernen lassen, jedoch kugelförmige Löcher in der Glasoberfläche zurücklassen, die für die Anwendung äußerst störend sind. Diese Kügelchen können vermieden werden, wenn der Gehalt an SnO₂ sehr gering ist.

Die erfindungsgemäßen Gläser werden ohne Verwendung der für Gläser aus dem Li₂O-Al₂O₃-SiO₂-System üblichen Läutermittel Arsen- und/oder Antimonoxid geläutert. Unter der Einwirkung der reduzierenden Bedingungen beim Floaten werden nämlich die genannten Läutermittel unmittelbar an der Glasoberfläche reduziert und bilden störende und visuell auffällige metallische Beläge. Die Entfernung dieser für die Anwendung störenden und toxikologisch bedenklichen Beläge durch Schleifen und Polieren ist aus wirtschaftlichen Gründen unvorteilhaft. Gemäß einer vorteilhaften Ausgestaltung der Erfindung ist das Glas so ausgebildet, daß zum Erreichen einer geringen Blasenzahl wenigstens ein alternatives chemisches Läutermittel, wie z.B. SnO₂, CeO₂, Sulfatverbindungen, Chloridverbindungen, bevorzugt 0,2 - 0,6 Gew.-% SnO₂ der Glasschmelze zugesetzt ist. Alternativ kann das Glas auch so ausgebildet sein, daß zum Erreichen einer geringen Blasenzahl die Glasschmelze physikalisch, z.B. mittels Unterdruck oder mittels Hochtemperatur >1750°C geläutert ist. Somit kann die erforderliche Blasenqualität über alternative Läutermittel und/oder alternative Läuterverfahren sichergestellt werden.

Bei besonders hohen Anforderungen an die Blasenqualität kann es notwendig werden, chemische Läuterung und physikalische Läuterverfahren zu kombinieren.

Die Oxide Li₂O, Al₂O₃ und SiO₂ in den bevorzugten, in den Ansprüchen angegebenen Grenzen, sind notwendige Komponenten in der Hochquarz- und Keatit-Mischkristallphase bei der Umwandlung des Glases in Glaskeramik. Als weitere Komponenten können MgO, ZnO und P₂O₅ eingebaut werden. Li₂O-Gehalte von über 5 Gew.-% erhöhen die Kristallwachstumsgeschwindigkeit und führen beim Herstellprozeß zu einer ungewollten Entglasung. Da der ZnO-Gehalt wegen der beschriebenen Problematik der Verdampfung und der Bildung eines Kristallbandes auf weniger als 1,5 Gew.-%, bevorzugt weniger als 1 Gew.-%, begrenzt ist, sind mindestens 0,1 und bevorzugt mindestens 0,3 Gew.-% MgO erforderlich, damit neben dem Li₂O noch eine weitere Komponente zur Ladungskompensation für das anstelle des Si in den Kristall eingebaute Al dienen kann. Höhere Gehalte von MgO als 2,2 Gew.-% erhöhen den Ausdehnungskoeffizienten der Glaskeramik in unzulässiger Weise. Zur Vermeidung hoher Viskositäten des Glases und der Neigung zu unerwünschter Kristallisation von Mullit ist der Al₂O₃-Gehalt auf 25 Gew.-% begrenzt. Der SiO₂-Gehalt ist auf maximal 69 Gew.-% begrenzt, da diese Komponente die Viskosität des Glases stark erhöht und somit für das Einschmelzen der Gläser und hinsichtlich der Temperaturbelastung des Floatteils höhere Gehalte unzulässig sind. Die Zugabe der Alkalien Na₂O, K₂O, sowie der Erdalkalien CaO, SrO, BaO verbessern zwar die Schmelzbarkeit und das Entglasungsverhalten des Glases beim Floaten. Die Gehalte sind jedoch begrenzt, weil diese Komponenten im wesentlichen in der Restglasphase der Glaskeramik verbleiben und die thermische Ausdehnung in unzulässiger Weise erhöhen. Auch können höhere Gehalte des Kristallisationsverhalten beeinträchtigen. Die Summe der Alkalien Na₂O und K₂O soll mindestens 0,2, bevorzugt mindestens 0,4 Gew.-% betragen. Die Zugabe von P₂O₅ kann bis zu 3 Gew.-% betragen und ist günstig für die Unterdrückung der störenden Mullit-Kristallisation. Der Gehalt sollte weniger als 3,0 Gew.-%, bevorzugt weniger als 2 Gew.-% betragen, da P₂O₅ sich ungünstig auf die Säurebeständigkeit auswirkt. Die Gehalte der keimbildenden Komponenten TiO₂, ZrO₂, SnO₂ sind in relativ engen Grenzen zu kontrollieren. Auf der einen Seite sind Mindestgehalte von 2,5 Gew.-%, bevorzugt 3,0 Gew.-% erforderlich, um während der Keimbildung Keime in hoher Dichte zu erzeugen, damit nach dem Aufwachsen der Hochquarz-Misch-kristalle transparente Glaskeramiken realisierbar sind. Durch die hohe Keimdichte bleibt die mittlere Kristallitgröße der Hochquarz-Mischkristalle auf Werte < 100 nm begrenzt, wodurch eine störende Lichtstreuung vermieden wird. Höhere Keimbildner-Gehalte als 5,0 Gew.-% führen jedoch unter den Zeit/Temperaturbedingungen des Floatens bereits zu störenden Oberflächenkristallen im Kontakt zwischen Glas und Zinnbad. Wenn eine Einfärbung der Gläser bzw. Glaskeramiken gewünscht ist, können übliche färbenden Komponenten wie Vanadin-, Chrom-, Mangan-, Eisen-, Kobalt-, Kupfer-, Nickel-, Selen-, Chlorid-Verbindungen dem Glas bei der Schmelze zugesetzt werden.

Der Wassergehalt der erfindungsgemäßen Gläser liegt abhängig von der Wahl der Gemengerohrstoffe und von den Prozeßbedingungen bei der Schmelze üblicherweise zwischen 0,01 und 0,06 Mol/Liter.

Daher besitzt das erfindungsgemäße Glas gemäß einer ersten Weiterbildung bevorzugt eine Zusammensetzung in Gew.-% auf Oxidbasis von:

| | |
|---|---|
| Li₂O | 3,2-5,0 |
| Na₂O | 0-1,5 |
| K₂O | 0-1,5 |
| ΣNa₂O+K₂O | 0,2-2,0 |
| MgO | 0,1-2,2 |
| CaO | 0-1,5 |
| SrO | 0-1,5 |
| BaO | 0-2,5 |
| ZnO | 0-<1,5 |
| Al₂O₃ | 19-25 |
| SiO₂ | 55-69 |
| TiO₂ | 1,0-5,0 |
| Zr0₂ | 1,0-2,5 |
| Sn0₂ | 0-<1,0 |
| ΣTi0₂+ZrO₂+Sn0₂ | 2,5-5,0 |
| P₂O₅ | 0-3,0 |

Gemäß einer zweiten Weiterbildung der Erfindung besitzt das Glas in einer besonders bevorzugten Ausführungsform eine Zusammensetzung in Gew.-% auf Oxidbasis von:

| | |
|---|---|
| Li₂O | 3,5-4,5 |
| Na₂O | 0,2-1,0 |
| K₂O | 0-0,8 |
| ΣNa₂O+K₂O | 0,4-1,5 |
| MgO | 0,3-2,0 |
| CaO | 0-1,0 |
| SrO | 0-1,0 |
| BaO | 0-2,5 |
| ZnO | 0-1,0 |
| Al₂O₃ | 19-24 |
| SiO₂ | 60-68 |
| TiO₂ | 1,0-2,0 |
| Zr0₂ | 1,2-2,2 |
| Sn0₂ | 0-0,6 |
| ΣTi0₂+Zr0₂+Sn0₂ | 3,0-4,5 |
| P₂O₅ | 0-2,0 |

Als weiterer Vorteil hat es sich erwiesen, daß die erfindungsgemäßen Glaszusammensetzungen auch chemisch vorgespannt werden können, wenn der Gehalt an Li₂O und Na₂O in der Summe mehr als 3,5 Gew% beträgt. Infolge des vergleichsweise hohen Li₂O-Gehaltes ist es möglich, durch Ionenaustausch mit Na₂O, bevorzugt K₂O hohe Druckspannungen in der Glasoberfläche zu erzeugen.

Die unter Beteiligung des ZnO (wie beschrieben) entstehenden Kristallbänder werden noch durch die weitere Komponente TiO₂ verursacht. Es wird angenommen, daß in Oberflächennähe eine teilweise Reduktion des Titans zu dreiwertiger Form Ti³⁺ stattfindet, die im Zusammenspiel mit dem Zn²⁺, ab einer bestimmten Mindestmenge von Zink, die Kristallbänder verursachen. Das schädliche Oberflächenkristallband kann gemäß einer Ausgestaltung der Erfindung vermieden werden, wenn die Beziehung (in Gew.-%) 3,2 x ZnO + TiO₂ <4,3 eingehalten wird. Es ist also möglich, durch Verminderung der TiO₂-Zugabe die schädliche Wirkung des ZnO teilweise zu kompensieren. In bevorzugten ZnO-freien Zusammensetzungen wird die Entstehung des Kristallbandes zuverlässig verhindert.

Der besondere wirtschaftliche Vorteil des genannten Glaszusammensetzungsbereiches ist es, daß mit gleicher Zusammensetzung sowohl thermisch und chemisch vorspannbare Gläser als auch Glaskeramiken mit niedriger thermischer Ausdehnung hergestellt werden können.

Kostspieliges und zeitaufwendiges Umschmelzen zwischen verschiedenen Zusammensetzungen kann somit vermieden werden. Auch die Fertigungslogistik wird z.B. hinsichtlich Gemengerohstoff- und Scherbenbevorratung vereinfacht. Aus dem gelagerten Glas können die verschiedenen Produkte über Nachverarbeitung gemäß der Marktnachfrage hergestellt werden.

Für die Anwendung des Glases, z.B. als thermisch vorgespanntes Brandschutzsicherheitsglas, ist typischerweise eine hohe Lichttransmission erforderlich. Eine störende Einfärbung im glasigen Zustand soll vermieden werden. So fordert z.B. die einschlägige EN-Norm für den Einsatz von Brandschutzsicherheitsglas im Baubereich eine Lichttransmission bei 4 mm Dicke von > 90%. Es hat sich gezeigt, daß die geforderte Lichttransmission von > 89, bevorzugt > 90 %, gemäß einer Ausgestaltung der Erfindung durch Gehalte von weniger als 200 ppm Fe₂O₃ und weniger als 2,5 Gew.-% TiO₂ im Glas erreicht werden kann.

Für die chemischen Läuterungsmittel Arsen- und Antimonoxid geltende Umweltproblematik trifft, wenn auch in geringerem Maße, auf das Bariumoxid zu. Bariumhaltige Rohstoffe, insbesondere wenn sie wasserlöslich sind wie z.B. Bariumchlorid und Bariumnitrat, sind toxisch und erfordern besondere Vorsichtsmaßnahmen beim Einsatz. In den erfindungsgemäßen Glaszusammensetzungen ist es mit Vorteil möglich, auf den Einsatz von BaO bis auf technisch unvermeidbare Spuren zu verzichten.

Beim Umwandeln der erfindungsgemäßen Ausgangsgläser in Glaskeramiken mit Hochquarz- oder Keatit-Mischkristallen als Hauptkristallphase kann daher mit Vorteil auch für die Glaskeramik die hohe Oberflächenqualität beim Floaten gegenüber dem üblichen Walzen genutzt werden. Die Formgebung über Floaten hat gegenüber dem Walzen den weiteren Vorteil, daß größere Bandbreiten möglich sind und die Dicke schneller und in weiteren Grenzen erstellbar ist.

Das erfindungsgemäße Glas ist typischerweise gekennzeichnet durch einen Wärmeausdehungskoeffizienten α_{20/300} zwischen 3,5 und 5,0 x 10⁻⁶/K. Liegt der Wärmeausdehnungskoeffizient unter 3,5 ·10⁻⁶/K, so ist es schwierig, mit herkömmlichen Luft-Vorspannanlagen eine für den Krümelbruch nach DIN 1249 ausreichende Druckvorspannung zu erreichen. Eine thermische Vorspannung zum Beispiel durch Eintauchen in ölbeschichtetes Wasser ist bekannt, gestaltet sich jedoch technisch wesentlich aufwendiger und ist erheblich kostenintensiver als das Abschrecken mit Luft in herkömmlichen Luft-Vorspannanlagen. Zum Erreichen einer hohen Temperaturunterschiedsfestigzeit soll der Wärmeausdehnungskoeffizient α_{20/300} nicht mehr als 5,0 x 10⁻⁶/K betragen. Die Transformationstemperatur Tg des gefloateten Glases soll zwischen 600 und 750° C liegen. Solche im Vergleich zu üblichen Kalknatrongläsern hohe Transformationstemperaturen sind positiv für das Erreichen einer hohen Druckvorspannung und damit einer hohen Temperaturunterschiedsfestigkeit. Die Transformationstemperatur soll 750° C nicht überschreiten, da sonst die Gefahr besteht, daß die Brandschutzverglasung im Brandfall durch den sich verziehenden Stahlrahmen zerstört wird, da das Glas für den Abbau thermischer Spannungen noch nicht weich genug ist. Darüber hinaus ist für höhere Transformationstemperaturen eine technisch wesentlich aufwendigere Luftvorspannanlage erforderlich. Die Verarbeitungstemperatur V_{A} liegt unter 1350° C (um die thermische Belastung des Floatbades und die Verdampfung von Sn zu begrenzen).

Gemäß einer bevorzugten Ausgestaltung der Erfindung ist das Glas gekennzeichnet durch einen Wärmeausdehungskoeffizienten α_{20/700} nach Umwandlung in die transparente Glaskeramik mit Hochquarz-Mischkristallen als vorherrschende Kristallphase, der nicht mehr als 0,5, bevorzugt weniger als 0,15·10⁻⁶/K, von der Nullausdehnung abweicht, um hohe Temperaturunterschiedsfestigkeiten zu erreichen.

Für Glaskeramiken in transparenter Form, z.B. für den Einsatz als Kaminsichtscheiben, sollen die Gehalte TiO₂ < 2 Gew%, SnO₂ < 0,5 Gew% und Fe₂O₃ < 200 ppm betragen, damit bei 4 mm Dicke eine Lichttransmission von > 80 % erreicht werden kann.

Bei transparenten, transluzenten oder opakten Glaskeramiken werden gewünschte Farbtöne durch den Zusatz der färbenden Verbindungen einzeln oder gemeinsam erreicht. Hier sind oft schon geringe Zusätze ausreichend.

In eingefärbter Form für den Einsatz als Kochfläche ist eine Lichttransmission bei 4 mm Dicke von < 5 %, die durch Einfärbung mit V-, Cr-, Mn-, Fe-, Co-, Cu-Ni-, Se-, Cl-Verbindungen erreicht werden kann. Die Einfärbung mit V-Verbindungen hat für den Einsatz als Kochflächen Vorteile, weil die Einfärbung im Sichtbaren mit einer günstigen hohen Transmission im Infraroten kombiniert werden kann.

Bei Umwandlung in die Glaskeramik mit Keatit-Mischkristallen als vorherrschende Kristallphase soll der Wärmeausdehnungskoeffizient weniger 1,5·10⁻⁶/K betragen. Solche Glaskeramiken können je nach Zusammensetzung in transparenter, weiß transluzenter oder weiß opaker Form vorliegen. Bei Verwendung von Farboxiden wird der Weißton entsprechend überfärbt.

Wenn eine Beschichtung des Glases gewünscht ist, ist es wirtschaftlich vorteilhaft, die Restwärme des Glases aus dem Formgebungsprozeß auszunutzen und diese Beschichtung im Floatteil und/oder vor Abkühlung des Glases vorzunehmen. Auf diese Weise können eine oder mehrere Schichten z.B. aus SiO₂, TiO₂, SnO₂, Al₂0₃, WO₃, VO₂ oder leitfähige Indium/Zinnoxid-Schichten aufgebracht werden.

Das Glas wird in einer Schmelzwanne in üblicher sauerstoffhaltiger Atmosphäre aus in der Glasindustrie gebräuchlichen Rohstoffen erschmolzen und einem Läutervorgang zur Entfernung der Blasen unterworfen. Durch einen Wall mit einer Durchflussöffnung fließt die Schmelze durch einen Interface, das die sauerstoffhaltige Atmosphäre fernhält. Die Schmelze wird im Interface gerührt und über eine Rinne in das Floatteil mit reduzierender Atmosphäre geleitet. Die Glasschmelze fließt über eine spout-lip bei Viskosität in der Gegend der Verarbeitungstemperatur V_{A} und wird auf das flüssige Zinnmetall aufgegossen. Wesentlich ist es, daß die Temperatur an der spout-lip oberhalb der Entglasungstemperatur der Schmelze liegt, damit es nicht zu einer vorzeitigen unkontrollierten Entglasung der Schmelze kommt. Dies wird konstruktiv durch Heizungen in oder um die spout-lip herum erreicht. Nach dem Auftreffen auf das flüssige Metall wird die Schmelze geformt, abgekühlt und am Ende des Floatteils wird das Glas dann bei Temperaturen knapp oberhalb der Transformationstemperatur entnommen und in einem Kühlofen entspannt. Anschließend findet online eine Qualitätskontrolle, das Schneiden und Abstapeln des Glases in den gewünschten Formaten statt.

Das erfindungsgemäße gefloatete Flachglas erlaubt eine vorzugsweise Verwendung sowohl als thermisch vorspannbares Glas, als auch nach Umwandlung in eine Glaskeramik mit Hochquarz-Mischkristall oder Keatit-Mischkristallen als Hauptkristallphase als erfindungsgemäße Glaskeramik mit niedriger thermischer Ausdehnung. Das thermisch vorspannbare Glas findet bevorzugt Verwendung als thermisch vorgespanntes Brandschutzglas mit Sicherheitsglaseigenschaften gemäß DIN 1249 (Krümelbruch). Die erfindungsgemäße Glaskeramik findet bevorzugt Verwendung in transparenter Form als Brandschutzglas, Kaminsichtscheibe, Abdeckung von Leuchten hoher Energie sowie Scheibe für Pyrolyseherde und in dunkel eingefärbter Form als beheizbare Platte zum Kochen und Grillen. Durch Aufbringen einer lichtabsorbierenden Unterseitenbeschichtung läßt sich auch aus transparenten Glaskeramiken eine Kochfläche mit der geforderten Lichttransmission herstellen.

Durch die hohe Oberflächenqualität des Floatprozesses gegenüber dem üblichen Walzen ergeben sich bei den Glaskeramikprodukten ästhetische Vorteile. Störende Lichtreflexe bei der Aufsicht und Verzerrungen bei der Durchsicht werden vermieden. Die Verwendung der transparenten Glaskeramik als Brandschutzglas ist möglich, ohne daß eine kostspielige Politur der Oberfläche erfolgen muß. Bei Verwendung als Kaminsichtscheibe, Scheibe für Pyrolyseherde und als Abdeckung von Leuchten hoher Energie ist die Floatoberfläche wesentlich unempfindlicher gegenüber dem Anhaften von Verschmutzungen und läßt sich leichter reinigen als eine gewalzte Oberfläche mit ihrer Mikrorauhigkeit.

Die vorliegende Erfindung wird mit Hilfe der folgenden Beispiele weiter verdeutlicht.

Für einige Ausführungsbeispiele sind in Tabelle 1 Zusammensetzungen und Eigenschaften gefloateter Gläser aufgeführt. Dabei handelt es sich bei Beispiel 1 bis 14 um erfindungsgemäße Gläser und bei den Beispielen 15 - 17 um Vergleichsbeispiele außerhalb der vorliegenden Erfindung. In Tabelle 2 sind die Eigenschaften der dazugehörigen Glaskeramiken zusammengestellt.

Die Ausgangsgläser von Tabelle 1 wurden unter Verwendung von in der Glasindustrie üblichen Rohstoffen geschmolzen und geläutert. Der Fe₂O₃-Gehalt dieser Gläser liegt bei 160 ppm. Beim Beispiel 2 wurden durch Verwenden eines reinen SiO₂-Rohstoffs 100 ppm Fe₂O₃ erreicht. Die Gläser von Beispiel 1 - 16 wurden in Tiegeln aus gesintertem Kieselglas bei Temperaturen von ca. 1620° C erschmolzen und geläutert. Danach wurden die Schmelzen in Platin/Rhodiumtiegel mit Innentiegel aus Kieselglas zur Vermeidung eines direkten Platin/Rhodium-Kontaktes umgegossen und bei Temperaturen von ca. 1580° C, 30 Minuten homogenisiert. Nach Abstehen bei ca. 1640° C, 1 Stunde wurden Gußstücke von ca. 140 x 100 x 30 mm Größe gegossen und in einem Kühlofen, beginnend ab ca. 660° C, auf Raumtemperatur abgekühlt. Aus diesen Gußstücken wurden die Prüfmuster, z.B. Stäbe für die Messung der Transformationstemperatur Tg und des thermischen Ausdehnungskoeffizienten α_{20/300}, herauspräpariert. Durch die Vermeidung des Platin/Rhodium-Kontaktes der Glasschmelze beträgt der Pt-Gehalt 10 - 30 ppb, der Rhodium-Gehalt liegt unter der Nachweisgrenze < 10 ppb.

Zusätzlich wurden die erfindungsgemäßen Zusammensetzungen in einem hochfrequenzbeheizten 4 1-Tiegel aus gesintertem Kieselglas bei Temperaturen um 1750° C eingeschmolzen. Nachdem das Gemenge vollständig aufgeschmolzen war, wurde bei 1900 - 2000° C 1 Stunde geläutert. Durch diese Hochtemperaturläuterung wurden sehr blasenfreie Gußstücke erhalten. Diese Gußstücke wurden für Versuche zum Aufgießen in eine kommerzielle Floatanlage für das Floaten von Spezialgläsern vorbereitet. Dabei wurden die Gußstücke in einem 2 1-Tiegel aus Platin/Rhodium mit Kiegelglasinnentiegel wieder aufgeschmolzen. Diese Tiegel wurden am vorderen Ende einer Halteapparatur mit einem langen Stab befestigt. Die Halteapparatur mit dem Tiegel wurde über kleine Öffnungen in die Floatanlage eingeführt. Die im Tiegel befindliche Schmelze wurde am Anfang der Floatanlage hinter der spout-lip auf das flüssige Zinn aufgegossen und während des Glattfließens an das Produktionsband, bestehend aus Borosilikatglas, angeheftet. Die Verweilzeit des ausgegossenen Glases auf dem Floatbad betrug ca. 30 - 40 Minuten. Zusammen mit dem Produktionsband aus Borosilikatglas wurden die Versuchsschmelzen durch die Floatanlage und durch den Kühlofen transportiert. Hinter dem Kühlofen konnten die erstarrten Versuchsschmelzen mit ca. 4 - 6 mm Dicke vom Produktionsband abgeschnitten und für Untersuchungen entfernt werden. Bedingt durch die sehr ähnlichen Ausdehnungskoeffizienten von Borosilikatglas und den erfindungsgemäßen Zusammensetzungen blieben die Versuchsschmelzen auch während des Abkühlens sehr gut haften, ohne daß, bedingt durch Spannungen aufgrund unterschiedlicher Wärmeausdehnungskoeffizienten, die Versuchsschmelzen vom Produktionsband abbrachen. Die gefloateten, erfindungsgemäßen Zusammensetzungen wurden auf ihre Lichttransmission nach DIN 5033 gemessen. Ferner werden die gefloateten Versuchsschmelzen an Ober- und Unterseite auf Glasfehler, insbesondere Kristalle untersucht. Die Oberseite der gefloateten Versuchsschmelzen ist frei von Kristallen. Nur in seltenen Fällen, wenn von der Decke des Floatbades Substanzen auf die Glasschmelze auftreffen, können sich im Kontakt Kristalle bilden. An der Unterseite der gefloateten Versuchsschmelzen finden sich vereinzelte, aber visuell nicht störende, Kristalle. Die Entstehung dieser Kristalle wird auf den Eintrag geringer Mengen von Luftsauerstoff in das Floatbad und an die Grenze zwischen Versuchsschmelze und dem Bad aus flüssigem Zinn zurückgeführt. Der unter Versuchsbedingungen eingetragene Luftsauerstoff kann das Sn lokal oxidieren, wodurch es dann in das Glas eindiffundiert und als Keimbildner wirkt, der lokal Hochquarz-Mischkristalle erzeugt. Die thermische Vorspannbarkeit des Glases und die Umwandlung in die Glaskeramik wird durch die vereinzelten Unterseitenkristalle nicht beeinträchtigt.

Ausscheidungen von Pt und insbesondere Rh werden nicht gefunden.

Die sehr schädlichen Kristallbänder treten bei den Versuchsschmelzen mit erfindungsgemäßen Gläsern nicht auf.

Auch Sn-Tropfen werden an der Oberseite der gefloateten Versuchsschmelzen nicht gefunden.

Das Vergleichsbeispiel Nr. 15 zeigt eine Zusammensetzung, die mit As₂O₃ als Läutermittel geschmolzen wurde. Gußstücke dieser Zusammensetzung werden mit dem beschriebenen Verfahren in die Floatanlage eingegossen und an das Produktionsband angeheftet. Das aus der Floatanlage ausgetragene gefloatete Glas zeigt metallische Beläge aus Arsen, die durch die reduzierende Formiergasatmosphäre des Floatbades gebildet wurden. Beim Vergleichsbeispiel 16 wurde bei gleicher Grundzusammensetzung gegenüber Vergleichsbeispiel 15 auf den Zusatz von As₂O₃ verzichtet. Nach Aufgießen auf das Floatbad zeigt das Glas auf beiden Seiten in Oberflächennähe das schädliche Kristallband aus Hochquarz-Mischkristallen. Dieses Glas hat eine Zusammensetzung mit hohem ZnO-Gehalt und relativ hohem TiO₂-Gehalt.

Bei Vergleichsbeispiel 17 wurde die Zusammensetzung von Beispiel 16 ohne Kieselglasinnentiegel direkt in einem Platin/Rhodium-Tiegel erschmolzen. Der Platingehalt der erschmolzenen Gußstücke wurde zu 900 ppb bestimmt. Das gefloatete Glas zeigt dendritisch gewachsene bis zu 100 *µ*m große Oberflächenkristalle und benachbarte tröpfchenförmige metallische Ausscheidungen.

Die Umwandlung in die Glaskeramik erfolgte bei den in Tabelle 2 aufgeführten Keimbildungs- und Kristallisationsbedingungen. Nach schnellem Aufheizen auf 600° C wird das Aufheizen auf die Keimbildungstemperatur und die weitere Erhöhung von der Keimbildungstemperatur auf Kristallisationstemperatur mit einer einheitlichen Heizrate von 2,5 K/Min. durchgeführt. Die Abkühlung von Maximaltemperatur erfolgte bis ca. 600° C mit einer Abkühlrate von ca. 4 K/Min., anschließend durch Abschalten der Ofenheizung. Das Beispiel 11 zeigt eine Glaskeramik, die durch eine zusätzliche Temperaturerhöhung auf 1100° C, 1 Stunde in eine weiße transluzente Glaskeramik mit Keatit-Mischkristallen als vorherrschende Kristallphase umgewandelt wurde. Die restlichen erfindungsgemäßen Beispiele verfügen aufgrund ihres Gehaltes an Hochquarz-Mischkristallen als vorherrschende Kristallphase über die gewünschten sehr niedrigen Werte für die thermische Ausdehnung, gemessen im Temperaturbereich zwischen Raumtemperatur und 700° C. Die Hauptkristallphase und die mittlere Kristallitgröße wurden mittels Röntgenbeugungsdiffraktometrie bestimmt. Die Angabe des Lichttransmissionsgrades erfolgt nach DIN 5033.

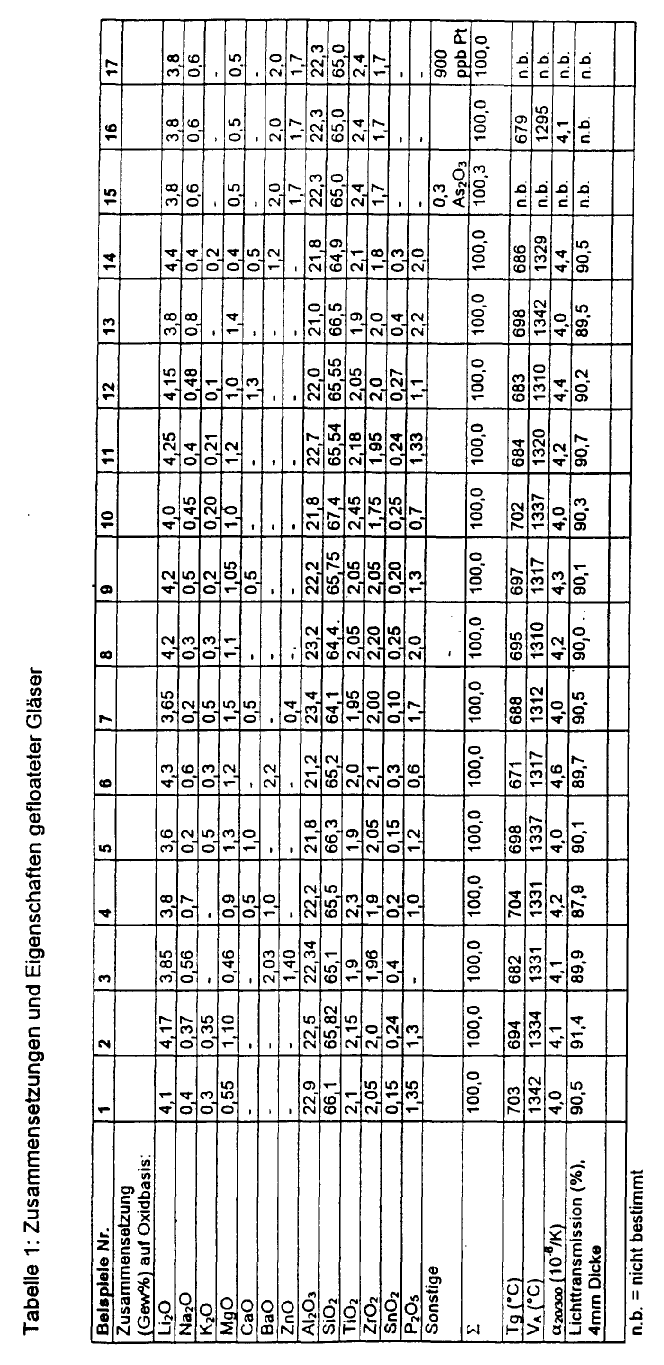

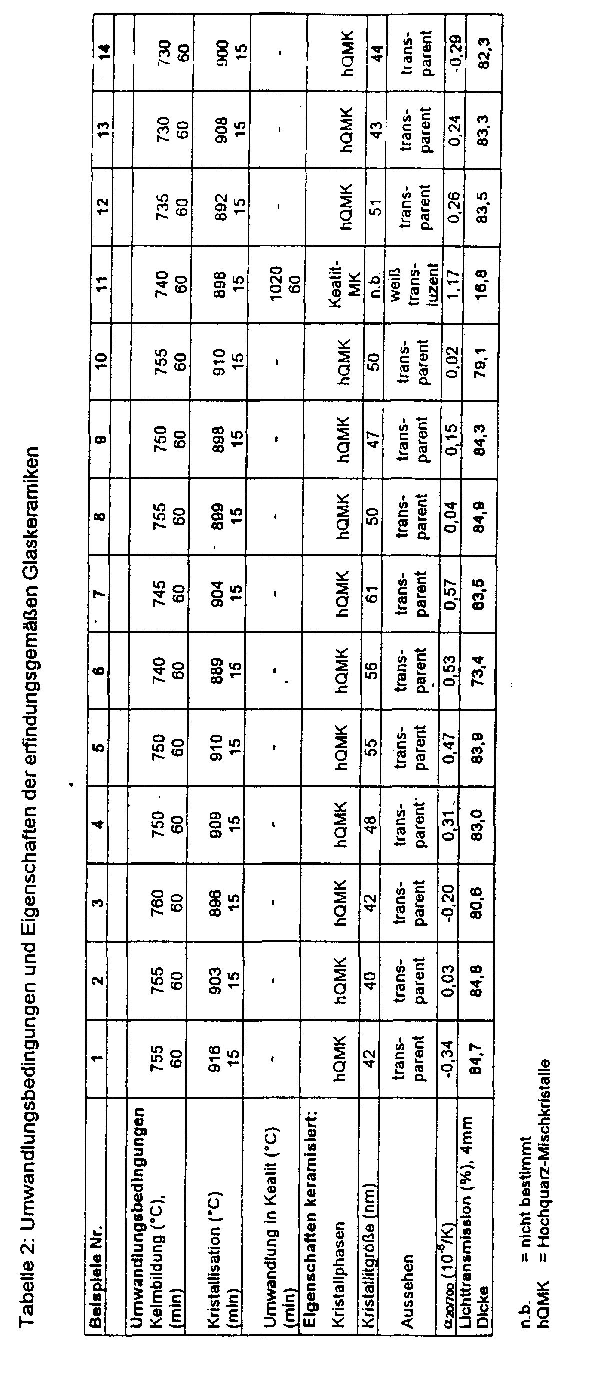

## Patentansprüche

1. Gefloatetes Flachglas, das vorspannbar oder in eine Glaskeramik mit Hochquarz-Mischristallen oder Keatit-Mischkristallen umwandelbar ist, das einen Gehalt von weniger als 300 ppb Pt, weniger als 30 ppb Rh, weniger als 1,5 Gew.-% ZnO und weniger als 1 Gew.-% SnO₂ zur Vermeidung störender Oberflächendefekte beim Floaten aufweist, und das bei der Schmelze ohne Verwendung der üblichen Läutermittel Arsen- und/oder Antimonoxid geläutert ist.

2. Flachglas nach Anspruch 1, **gekennzeichnet durch** eine Zusammensetzung (in Gew.-% auf Oxidbasis) von:
| | |
|---|---|
| Li₂O | 3,2-5,0 |
| Na₂O | 0-1,5 |
| K₂O | 0-1,5 |
| ΣNa₂O+K₂O | 0,2-2,0 |
| MgO | 0,1-2,2 |
| CaO | 0-1,5 |
| SrO | 0-1,5 |
| BaO | 0-2,5 |
| ZnO | 0-<1,5 |
| Al₂O₃ | 19-25 |
| SiO₂ | 55-69 |
| TiO₂ | 1,0-5,0 |
| ZrO₂ | 1,0-2,5 |
| Sn0₂ | 0-<1,0 |
| ΣTi0₂+ZrO₂+Sn0₂ | 2,5-5,0 |
| P₂O₅ | 0-3,0 |
ggf. mit Zusatz färbender Kompomenten, wie V-, Cr-, Mn-, Fe-, Co-, Cu-, Ni-, Se-, Cl-Verbindungen.

3. Flachglas nach Anspruch 2, **gekennzeichnet durch** eine Zusammensetzung (in Gew.-% of Oxidbasis) von:
| | |
|---|---|
| Li₂O | 3,5-4,5 |
| Na₂O | 0,2-1,0 |
| K₂O | 0-0,8 |
| ΣNa₂O+K₂O | 0,4-1,5 |
| MgO | 0,3-2,0 |
| CaO | 0-1,0 |
| SrO | 0-1,0 |
| BaO | 0-2,5 |
| ZnO | 0-1,0 |
| Al₂O₃ | 19-24 |
| SiO₂ | 60-68 |
| TiO₂ | 1,0-2,0 |
| Zr0₂ | 1,2-2,2 |
| Sn0₂ | 0-0,6 |
| ΣTi0₂+Zr0₂+Sn0₂ | 3,0-4,5 |
| P₂O₅ | 0-2,0 |
ggf. mit Zusatz färbender Kompomenten, wie V-, Cr-, Mn-, Fe-, Co-, Cu-, Ni-, Se-, Cl-Verbindungen.

4. Flachglas nach einem der Ansprüche 1 bis 3, **gekennzeichnet dadurch,** daß die Summe Li₂O + Na₂O > 3,5 Gew% beträgt und das Glas damit chemisch vorspannbar ist.

5. Flachglas nach einem der Ansprüche 1 bis 4, **gekennzeichnet dadurch,** daß zur Vermeidung der Entstehung eines schädlichen oberflächennahen Kristallbandes beim Floaten die Beziehung (in Gew.-%) : 3,2 x ZnO + TiO₂ ≤ 4,3 gilt.

6. Flachglas nach einem der Ansprüche 1 bis 5, **gekennzeichnet durch** Gehalte von weniger als 200 ppm Fe₂O₃ und weniger als 2,5 Gew.-% TiO₂ um einer störenden Einfärbung im glasigen Zustand entgegenzuwirken und um eine Lichttansmission bei 4 mm Dicke von > 89% bevorzugt,
> 90% zu erreichen.

7. Flachglas nach einem der Ansprüche 1 bis 6, **dadurch gekennzeichnet, daß** das Glas technisch frei von ZnO und BaO ist.

8. Flachglas nach einem der Ansprüche 1 bis 7, **gekennzeichnet durch** einen Wärmeausdehnungskoeffizienten α_{20/300} zwischen 3,5 und 5,0 x 10⁻⁶/K, eine Transformationstempertur Tg zwischen 600 und 750° C und eine Verarbeitungstemperatur V_{A} unter 1350° C.

9. Flachglas nach einem der Ansprüche 1 bis 8, **gekennzeichnet dadurch,** daß die nach Umwandlung hergestellte Glaskeramik ein transparentes, transluzentes oder opakes Aussehen hat und bei Zusatz von färbenden Komponenten über einen zusätzlichen Farbton verfügt.

10. Flachglas nach einem der Ansprüche 1 bis 9, **gekennzeichnet durch** einen Wärmeausdehungskoeffizienten α_{20/700} nach Umwandlung in die Glaskeramik mit Keatit-Mischkristallen als vorherrschende Kristallphase von weniger als 1,5 x 10⁻⁶/K.

11. Flachglas nach einem der Ansprüche 1 bis 10, **gekennzeichnet durch** einen Wärmeausdehungskoeffizienten α_{20/700} nach Umwandlung in die Glaskeramik mit Hochquarz-Mischkristallen als vorherrschende Kristallphase von (O ± 0,5) x 10⁻⁶/K, bevorzugt (O ± 0,15) x 10⁻⁶/K.

12. Flachglas nach Anspruch 11, **gekennzeichnet dadurch,** daß die transparente Glaskeramik zum Erreichen einer Lichttransmission bei 4 mm Dicke von > 80 % weniger als 2 Gew% TiO₂, weniger als 0,5 Gew% SnO₂ und weniger als 200 ppm Fe₂O₃ enthält.

13. Flachglas nach Anspruch 11, **gekennzeichnet dadurch,** daß die Glaskeramik mit V-, Cr-, Mu-, Fe-, Co-, Ni-Verbindungen eingefärbt ist mit einer Lichttransmission bei 4 mm Dicke von < 5 %.

14. Flachglas nach einem der Ansprüche 1 bis 13, **gekennzeichnet dadurch,** daß zum Erreichen einer geringen Blasenzahl wenigstens ein alternatives chemisches Läutermittel, wie z.B. SnO₂, CeO₂, Sulfatverbindungen, Chloridverbindungen, bevorzugt 0,2-0,6 Gew.-% SnO₂ der Glasschmelze zugesetzt ist.

15. Flachglas nach einem der Ansprüche 1 bis 14, **gekennzeichnet dadurch,** daß zum Erreichen einer geringen Blasenzahl die Glasschmelze physikalisch, z.B. mittels Unterdruck oder mittels Hochtemperatur > 1750° C geläutert ist.
